# EUROPEAN PATENT SPECIFICATION

(11) **EP 3 315 251 B1**
(45) Date of publication and mention of the grant of the patent: **04.05.2022**
(21) Application number: 17198319.0
(22) Date of filing: 25.10.2017
(51) Int. Cl.: B23Q 3/157, B23B 31/20, B23D 45/14, B23D 47/12, B27C 9/02, B23Q 39/02, B27B 5/20

(54) **ELECTROSPINDLE FOR AUTOMATIC TOOL CHANGING AND MACHINING CENTER WITH AUTOMATIC TOOL CHANGING DEVICE**
ELEKTROSPINDEL FÜR AUTOMATISCHEN WERKZEUGWECHSEL UND BEARBEITUNGSZENTRUM MIT AUTOMATISCHER WERKZEUGWECHSELVORRICHTUNG
ÉLECTROBROCHE POUR CENTRE D'ÉCHANGE ET D'USINAGE AUTOMATIQUE D'OUTILS AVEC DISPOSITIF DE CHANGEMENT AUTOMATIQUE D'OUTILS

(30) Priority: 26.10.2016 IT 201600107750
(43) Date of publication of application: 02.05.2018
(73) Proprietor: Essetre S.r.l., 36016 Thiene (VI) (IT)
(72) Inventor: PASQUALE, Enrico, 36040 GRUMOLO DELLE ABBADESSE VI (IT)
(74) Representative: Modiano, Micaela Nadia

(56) References cited:
- EP-A1- 2 799 174
- EP-A2- 0 271 355
- JP-A- H10 501

## Description

The present invention relates to an electrospindle for automatic tool changing and to a machining center with an automatic tool changing device.

Nowadays machining centers are known and are appreciated for their versatility, for machining wooden beams and the like, of the type comprising:
- a portal that has an opening for the passage of a beam to be machined,
- advancement means for a beam to be machined, which define an axis of insertion of the beam through the passage opening,
- movement means for a machining head, which comprise for example means of translation on two axes and means of rotation for the angular positioning of the machining head with respect to a beam to be machined;
- a tool-holder, for example of the revolver type, adapted to support replacement tools for the machining head.

The machining head is constituted by an electrospindle, which comprises an electric motor that is adapted to actuate a driving shaft that supports one or two tools.

Nowadays dual-output electric spindles are increasingly widespread, i.e. ones that have at one end a coupling for milling tools, which are interchangeable, and at the opposite end a bladed tool, which is fixed.

In a conventional electrospindle, a single output and interchangeable tool, a cross-section of which is shown in Figure 7 (see also Patent Document EP2799174A, on which the preamble of appended claim 1 is based) and generally designated therein with the letter A, the interchangeable tool B is coupled reversibly to the rotating shaft C of the spindle by way of a conventional clamp-like device D, the opening and closing of which is governed by an axial maneuvering rod E, which is coaxial and passes through the rotating shaft C.

The clamp-like device D comprises:
- at least one pair of mutually opposite longitudinal elastic gripping arms F, with external end teeth G, for engagement in an undercut defined by an abutment shoulder H protruding inside an axial cavity L of a frustum-shaped end portion M of the tool B,
- an anti-splaying element N inserted between the gripping arms F and fixed axially to the maneuvering rod E; the axial translation in a first direction of such anti-splaying element N determines the locking of the teeth G against the abutment shoulder H, while the axial translation in a second, opposite direction, for release, of such anti-splaying element N makes it possible for the gripping arms F to bend inward and therefore makes it possible to distance the teeth G from the abutment shoulder H, and consequently extract the frustum-shaped portion M from its locking seat N on the body of the electrospindle A and so remove the tool B.

The maneuvering rod E is translated in the second, release direction by way of a pusher P which is in turn supported by a piston Q of an actuation cylinder R; such actuation cylinder R is arranged so as to operate coaxially with the maneuvering rod E and is fixed to the electrospindle A at the other end with respect to the end where the tool B is coupled.

Nowadays for machining centers, there is increasing demand both for greater compactness and for versatility of the machining operations that can be carried out. A related electrospindle is described in EP0271355.

In this context, an electrospindle with the actuation cylinder for uncoupling the tool on board presents a considerable space occupation around the beam to be machined, with corresponding encumbrances of the machining head movement means and of the machining center that comprises those means.

Furthermore, an electrospindle with the actuation cylinder for uncoupling the tool on board requires the presence of pipes for the passage of the pressure medium of the actuation cylinder, and these, in addition to limiting some movements, mean that it is impossible to mount a second, bladed tool at the end of the electrospindle occupied by the actuation cylinder.

The aim of the present invention is to provide an electrospindle for automatic tool changing and a machining center with an automatic tool changing device which are capable of improving the known art in one or more of the above mentioned aspects.

Within this aim, an object of the invention is to provide an electrospindle that is more compact and therefore more easily maneuverable by the corresponding movement means.

Another object of the invention is to provide a machining center with more contained work spaces around the beam being machined, and which is therefore less cumbersome overall with respect to equivalent conventional machining centers.

Another object of the invention is to provide a machining center that offers versatility, performance and efficiency that are not inferior to conventional machining centers.

A still further object of the present invention is to overcome the drawbacks of the known art in a different manner to any existing solutions.

This aim and these and other objects which will become better apparent hereinafter are achieved by an electrospindle for automatic tool changing and by a machining center with an automatic tool changing device according to the appended claims.

Further characteristics and advantages of the invention will become better apparent from the description of a preferred embodiment of the electrospindle and of two preferred, but not exclusive, embodiments of the machining center according to the invention, which are illustrated for the purposes of non-limiting example in the accompanying drawings wherein:
- Figure 1 is a perspective view of a machining center according to the invention in a first embodiment thereof;
- Figure 2 is a cross-sectional side view of a portion of a machining center according to the invention;

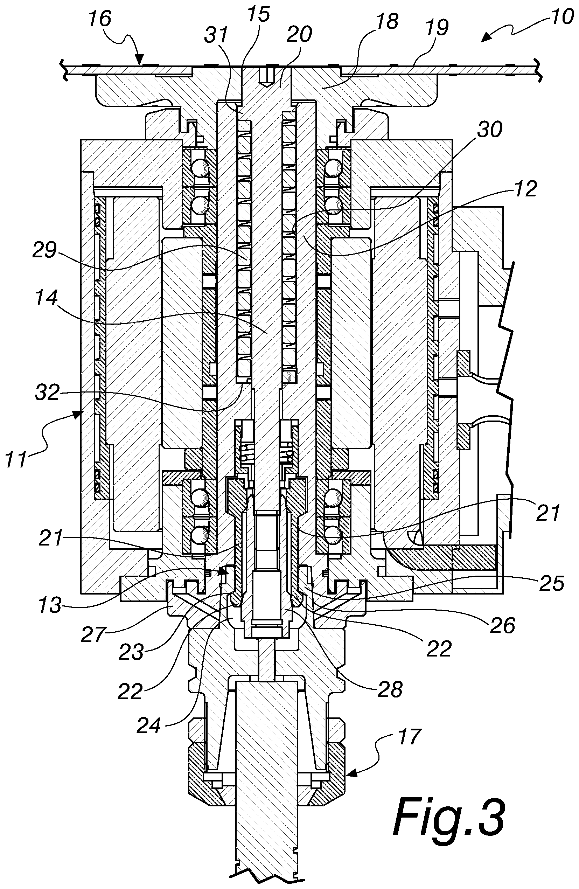

- Figure 3 is a cross-sectional side view of an electrospindle according to the invention;
- Figure 4 is a perspective view of a machining center according to the invention in a second embodiment;
- Figure 5 is a perspective view of a machining center according to the invention in the second embodiment thereof;
- Figure 6 is a cross-sectional side view of the detail in Figure 5;

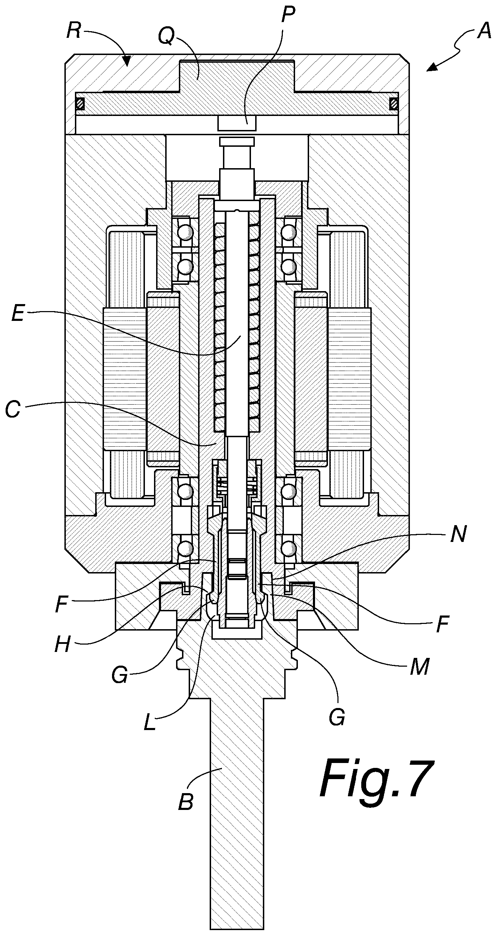

- Figure 7 is a cross-sectional side view of a conventional electrospindle.

With reference to the figures, an electrospindle according to the invention is generally designated by the reference numeral 10.

Such electrospindle for automatic tool changing 10 comprises:
- an electric motor 11, the rotating shaft 12 of which supports at one end a collet-like coupling 13 for interchangeable milling tools and the like, for example a tool 17,
- an axial maneuvering rod 14, which is coaxial and passes through the rotating shaft 12, for opening and closing the collet-like coupling 13.

The peculiarity of the electrospindle 10 according to the invention lies in the fact that it is configured so as to have direct access from the outside to the maneuvering rod 14 in order to move the latter.

Such direct access from the outside is constituted by an external opening 15 for direct access to the maneuvering rod 14.

In the present embodiment, the electrospindle 10 is characterized in that it comprises, at one end, a coupling 13 for interchangeable milling tools and the like, and, at the opposite end, a bladed tool 16.

For example, such bladed tool 16 comprises an annular blade-supporting body 18 and a circular blade 19, such blade-supporting body 18 being coaxial and concentric to the rotating shaft 12.

The external opening 15 for direct access to the maneuvering rod 14 is therefore defined on the annular blade-supporting body 18.

Such external opening 15 is constituted by a through hole.

The maneuvering rod 14 protrudes from such through hole with a shank 20 thereof.

The collet-like coupling 13 comprises:
- at least one pair of mutually opposite longitudinal elastic gripping arms 21, with external end teeth 22, for engagement in an undercut fashion to an abutment shoulder 23 defined inside an axial cavity 24 of a frustum-shaped end portion 25 of a tool 17; such frustum-shaped portion 25 is inserted into a corresponding seat 26 defined at one end 27 of the rotating shaft 12;
- an anti-splaying element 28 inserted between the gripping arms 21 and fixed axially to the maneuvering rod 14;
- an elastic locking element 29 adapted to push the maneuvering rod 14 and therefore the anti-splaying element 28 in the direction of locking of the gripping arms 21, so that the collet-like coupling 13 is usually in the locked configuration.

Such elastic locking element 29 is constituted for example by a helical spring arranged in a corresponding seat 30 therefore inside the rotating shaft 12, arranged so as to surround a portion of the maneuvering rod 14 between a pushing shoulder 31 of the latter and an opposite end face 32 of that seat 30.

The thrust of the elastic locking element 29 keeps the anti-splaying element 28 in the locked configuration of the teeth 22 against the abutment shoulder 23.

An axial thrust inward of the electrospindle 10 exerted on the shank 20 of the maneuvering rod 14 causes the axial translation of the maneuvering rod 14 and of the anti-splaying element 28 fixed to it, and the anti-splaying element 28 transitions from its configuration that prevents the gripping arms 21 from bending.

The anti-splaying element 28 is constituted for example by a collar, threaded internally for screwing to one end of the maneuvering rod.

The translated configuration of the anti-splaying element 28 therefore determines a configuration of release for the collet-like coupling 13, and therefore the ability of the gripping arms 21 to bend inward and the consequent possible distancing of the teeth 22 from the abutment shoulder 23, with the consequent ability to extract the frustum-shaped portion 25 from its locking seat 26 on the body of the electrospindle 10 and therefore the ability to remove the tool 17.

The maneuvering rod 14 is returned to the configuration of locking the collet-like coupling 13 by the elastic pusher 29.

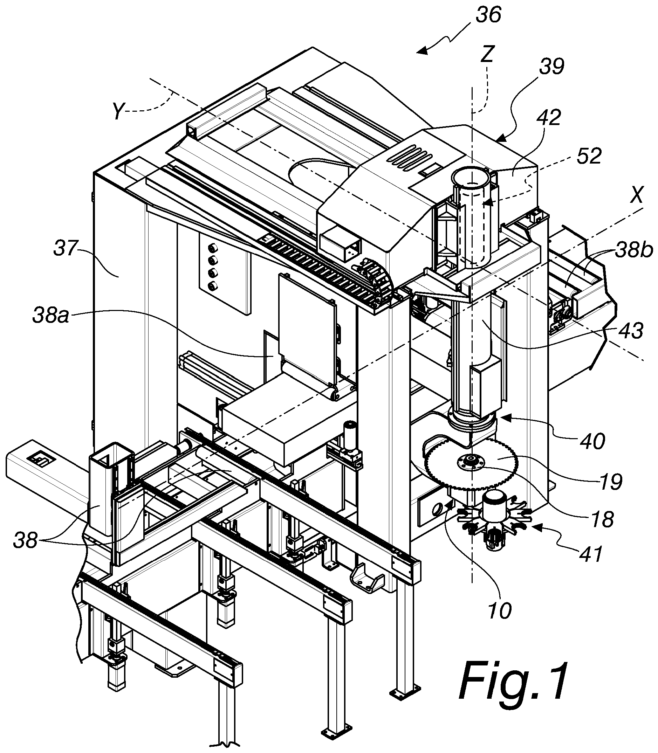

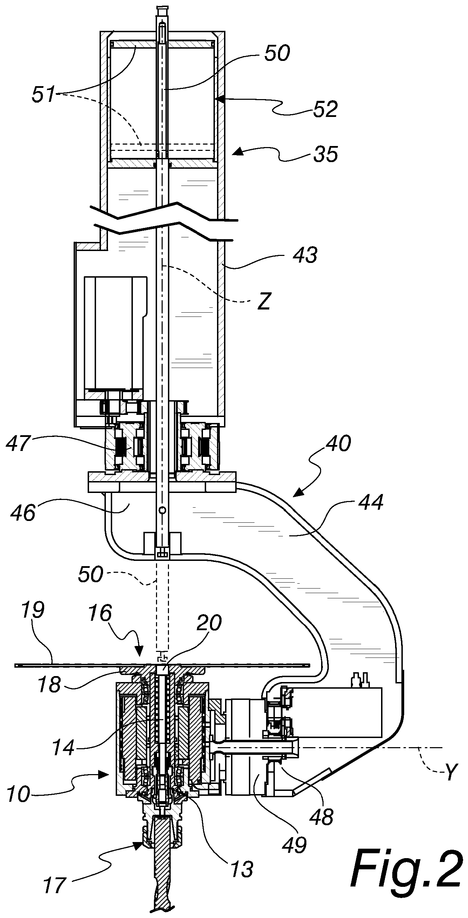

The maneuvering rod 14 is designed to be pushed at its shank 20 toward the inside of the electrospindle 10, in the direction of release of the collet-like coupling 13, by way of corresponding pusher means 35, visible in Figure 1 and 2, which are outside the electrospindle 10 and are better described hereinbelow.

The invention also relates to a machining center 36, comprising:
- a portal 37 that has an opening 38a for the passage of a beam to be machined,
- advancement means 38 for a beam to be machined, for example a loading grab and a resting surface on rollers at the point of entry and a conveyor belt 38b at the point of exit, which define an axis X of insertion of the beam through the passage opening 38a,
- movement means 39 for a machining head 40, which comprises an electrospindle 10 as described above,
- a tool-holder 41 adapted to support replacement tools for the machining head 40.

The machining center 36 further comprises automatic means 35 of pushing the maneuvering rod 14 of the collet-like coupling 13 of the electrospindle 10, the automatic pusher means 35 being arranged on board the movement means 39 of the machining head 40 or on the portal 37.

In a first embodiment of a machining center 36 according to the invention, the movement means 39 comprise means of translation on two axes Y and Z, and means of rotation for the angular positioning of the machining head 40 with respect to a beam to be machined.

First means of translation with respect to a second axis Y are constituted for example by a slider 42, while second means of translation with respect to a third axis Z are constituted by an arm 43 that extends predominantly in a direction parallel to the axis Z and is supported by the slider 42 with means for its translation in a direction parallel to the axis Z.

Such arm 43 is substantially tubular and carries the machining head 40 at its lower end.

Such machining head 40 comprises a C-shaped support 44, which is coupled rotatably by a first end 46 thereof, with a first rotational joint 47, to the arm 43 for a rotation about the axis Z.

The electrospindle 10 is in turn coupled rotatably to the second, opposite end 48 of the C-shaped support 44, which is pivoted with a second rotational joint 49, so as to rotate about an axis that is perpendicular to the axis Z.

The automatic pusher means 35 are arranged on board the arm 43 and are adapted to operate along the third axis Z.

In particular, the automatic pusher means 35 comprise a push rod 50 which is supported by a piston 51 arranged in an actuation cylinder 52, the actuation cylinder 52 being integrated within the tubular arm 43, as can clearly be seen in Figure 2.

Such actuation cylinder 52 is arranged so as to operate with the push rod 50 coaxial to the third axis Z.

The tool-holder 41, as can clearly be seen in Figure 1, is arranged in the lower part of the portal 37, below the tubular arm 43.

To use the push rod 50 to operate on the collet-like coupling 13, the tubular arm 43 is translated downward and the electrospindle 10 is rotated about the second axis Y until the electrospindle 10, and therefore the tool 17, is coaxial to the rod pusher 50 and therefore to the third axis Z.

Once brought to the predefined height and with a preset angular configuration, the tool 17 can be coupled to the tool-holder 41.

Then the actuation cylinder 52 of the automatic pusher means 35 is actuated, which determines the descent of the push rod 50 until the latter meets the shank 20 of the maneuvering rod 14 of the electrospindle 10; the inward movement of the maneuvering rod 14 determines, as described above, the release configuration of the collet-like coupling 13; at this point the tool 17 can be removed from the electrospindle 10.

The tool 17 is stowed or removed from the tool-holder 41 by performing a translation along the axis Y with the slider 42.

The tool-holder 41, for example of the revolver type, with its axis parallel to the third axis Z, is then rotated in order to position a new tool below the electrospindle 10, ready to be gripped by the collet-like coupling 13.

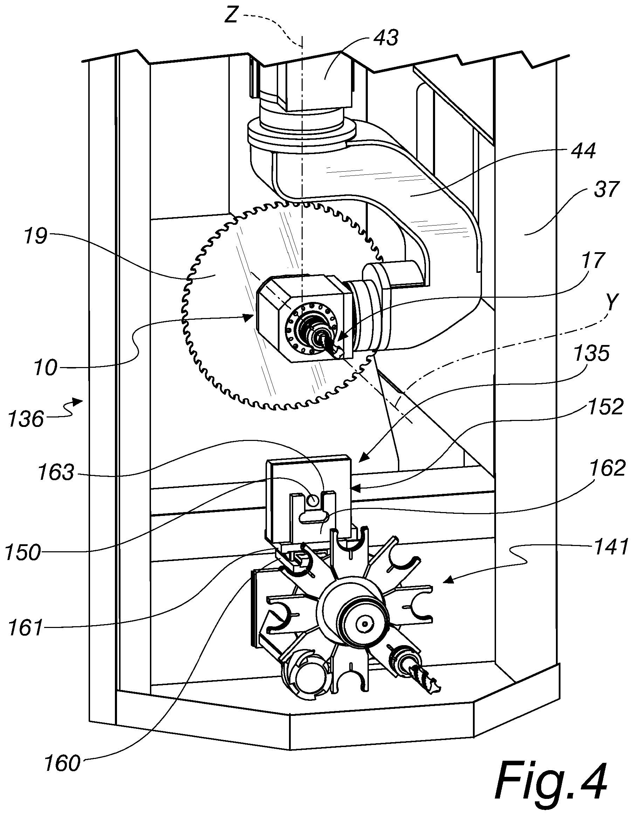

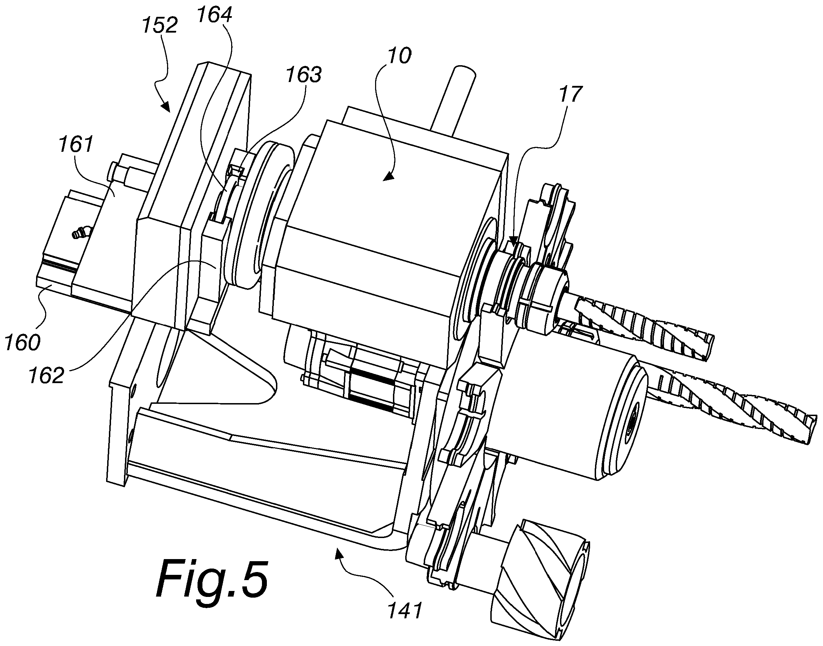

In a second embodiment of a machining center according to the invention, designated in Figure 4 with the reference numeral 136, the automatic pusher means 135 comprise a pusher 150 which is supported by a piston 151 arranged in an actuation cylinder 152, the actuation cylinder 152 being fixed to one side of the portal 37, as can clearly be seen in Figures 4 and 5.

Such actuation cylinder 152 is arranged so as to operate with the pusher 150 parallel to the second axis Y.

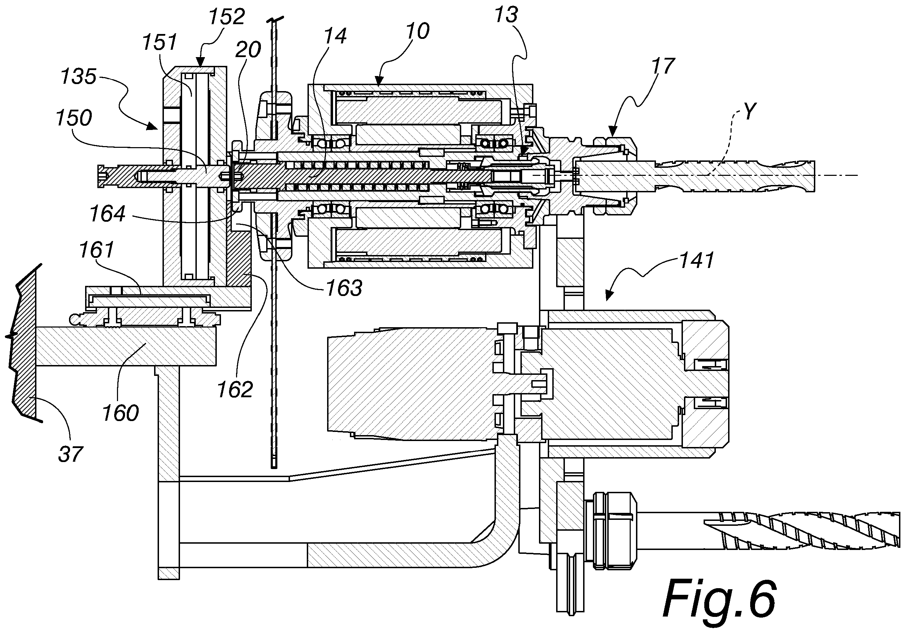

The tool-holder 141, as can clearly be seen in Figure 4, is arranged in the lower part of the portal 37, below the tubular arm 43, supported by a bracket 160, provided with a slider 161 for translation in the direction Y of the actuation cylinder 152 and a coupling plate 162 with a coupling cavity 163 for a corresponding annular protrusion 164 defined on the electrospindle 10, clearly visible in Figure 6.

To use the pusher 150 to operate on the collet-like coupling 13, the tubular arm 43 is translated downward and the electrospindle 10 is rotated by way of the first rotational joint 47 and by way of the second rotational joint 49 until the electrospindle 10 is positioned so as to be able to descend with the annular protrusion 164 which enters the coupling cavity 163.

Once such position is reached, the pusher 150 is coaxial with the electrospindle 10 and therefore with the maneuvering rod 14 of the collet-like coupling 13.

Once brought to the predefined height and with a preset angular configuration, the tool 17 can be coupled to the tool-holder 141.

Then the actuation cylinder 152 of the automatic pusher means 135 is actuated, which causes the egress of the pusher 150 until this meets the shank 20 of the maneuvering rod 14 of the electrospindle 10.

Once the tool 17 is decoupled, the electrospindle 10 retreats toward the side of the portal 37, taking with it the actuation cylinder 152 by virtue of the slider 161 on which it is mounted, leaving the tool 17 on board the tool-holder 141, to which that tool 17 has been coupled in the meantime.

Now the tool-holder 141 can rotate in order to bring a new tool to be coupled in front of the electrospindle 10.

In practice it has been found that the invention fully achieves the intended aim and objects.

In particular, with the invention an electrospindle has been devised that is more compact, by virtue of the separation of the actuator cylinders for pushing the maneuvering rod of the collet-like coupling, and therefore more easily maneuverable by the corresponding movement means.

Furthermore, with the invention an electrospindle has been devised that is compact even in the dual-output version.

In addition to this, with the invention a machining center has been devised with more contained work spaces around the beam being machined, and which is therefore less cumbersome overall with respect to equivalent conventional machining centers.

Moreover, with the invention a machining center has been devised that offers versatility, performance and efficiency that are not inferior to conventional machining centers.

The invention, thus conceived, is susceptible of numerous modifications and variations, as long as they fall under the scope of the appended claims.

In practice the components and the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electrospindle for automatic tool changing, comprising:
- an electric motor (11), the rotating shaft (12) of which supports at one end a collet-like coupling (13) for interchangeable milling tools and the like, and, at an opposite end, a bladed tool (16),
- an axial maneuvering rod (14), which is coaxial and passes through the rotating shaft (12), for opening and closing the collet-like coupling (13), said electrospindle being **characterized in that** it is configured so as to have direct access from the outside to said maneuvering rod (14) in order to move the latter wherein said bladed tool (16) comprises an annular blade-supporting body (18) and a circular blade (19), said blade-supporting body (18) being coaxial and concentric with respect to the rotating shaft (12) wherein an external opening (15) for direct access to the maneuvering rod (14) is defined on the annular blade-supporting body (18).

2. The electrospindle according to the preceding claim **characterized in that** said external opening for direct access (15) is constituted by a through hole, said maneuvering rod (14) protruding from said through hole with a shank thereof (20).

3. A machining center (36), comprising:
- a portal (37) that has an opening (38a) for the passage of a beam to be machined,
- advancement means (38) for a beam to be machined, which define an axis (X) of insertion of the beam through said passage opening (38a),
- a machining head (40), which comprises an electrospindle (10) according to claims 1 to 2,
- movement means (39) for the machining head (40),
- a tool-holder (41) adapted to support replacement tools for said machining head (40),
said machining center (36) being **characterized in that** it comprises automatic means (35) of pushing the maneuvering rod (14) of the collet-like coupling (13) of the electrospindle (10), said automatic pusher means (35) being arranged on board the movement means (39) of said machining head (40) or on the portal (37).

4. The machining center according to claim 3, **characterized in that** said movement means (39) comprise means of translation on two axes (Y, Z) and means of rotation for the angular positioning of the machining head (40) with respect to a beam to be machined.

5. The machining center according to claim 4, **characterized in that** first means of translation with respect to a second axis (Y) are constituted by a slider (42), while second means of translation with respect to a third axis (Z) are constituted by an arm (43) that extends predominantly in a direction parallel to the axis (Z) and is supported by the slider (42) with means for its translation in a direction parallel to the axis (Z), said arm (43) being substantially tubular and supporting the machining head (40) at the lower end thereof.

6. The machining center according to one or more of claims 3 to 5 **characterized in that** said machining head (40) comprises a C-shaped support (44), which is coupled rotatably by a first end (46) thereof, with a first rotational joint (47), to the tubular arm (43) for a rotation about the axis (Z), said electrospindle (10) being in turn coupled rotatably to the second, opposite end (48) of said C-shaped support (44), which is pivoted with a second rotational joint (49), so as to rotate about an axis that is perpendicular to said axis (Z).

7. The machining center according to claims 5 or 6, **characterized in that** said automatic pusher means (35) are arranged on said tubular arm (43) and are adapted to operate along said third axis (Z).

8. The machining center according to claim 7, **characterized in that** said automatic pusher means (35) comprise a push rod (50) which is supported by a piston (51) arranged in an actuation cylinder (52), said actuation cylinder (52) being integrated within the tubular arm (43).

9. The machining center according to one or more of claims 5 to 8, **characterized in that** the tool-holder (41) is arranged in the lower part of the portal (37), below the tubular arm (43).

## Patentansprüche

1. Eine Elektrospindel für automatischen Werkzeugwechsel, die Folgendes umfasst:
- einen Elektromotor (11), dessen Rotationswelle (12) an einem Ende ein hülsenartiges Kopplungselement (13) für austauschbare Fräswerkzeuge und dergleichen und an einem gegenüberliegenden Ende ein mit einer Klinge versehenes Werkzeug (16) trägt,
- eine axiale Manövrierstange (14), die koaxial ist und durch die Rotationswelle (12) verläuft, um das hülsenartige Kopplungselement (13) zu öffnen und zu schließen,
wobei die Elektrospindel **dadurch gekennzeichnet ist, dass** sie ausgebildet ist, um von außen direkten Zugriff auf die Manövrierstange (14) zu haben, um diese zu bewegen, wobei das mit einer Klinge versehene Werkzeug (16) einen ringförmigen Klingen-Haltekörper (18) und ein Rundmesser (19) umfasst, wobei der Klingen-Haltekörper (18) koaxial und konzentrisch mit der Rotationswelle (12) ist, wobei eine externe Öffnung (15) für direkten Zugriff auf die Manövrierstange (14) am ringförmigen Klingen-Haltekörper (18) bestimmt ist.

2. Die Elektrospindel gemäß dem obigen Anspruch, **dadurch gekennzeichnet, dass** die externe Öffnung (15) für direkten Zugriff in einem Durchgangsloch besteht, wobei die Manövrierstange (14) mit einem Schaft (20) derselben aus dem Durchgangsloch herausragt.

3. Ein Bearbeitungszentrum (36), das Folgendes umfasst:
- einen Portalrahmen (37), der eine Öffnung (38a) zum Hindurchführen eines zu bearbeitenden Balkens hat,
- Vorschubmittel (38) für einen zu bearbeitenden Balken, die eine Achse (X) zum Einführen des Balkens durch die Öffnung (38a) bestimmen,
- einen Bearbeitungskopf (40), der eine Elektrospindel (10) gemäß den Ansprüchen 1 bis 2 umfasst,
- Bewegungsmittel (39) für den Bearbeitungskopf (40),
- einen Werkzeughalter (41), ausgebildet, um Ersatzwerkzeuge für den Bearbeitungskopf (40) zu tragen,
wobei das Bearbeitungszentrum (36) **dadurch gekennzeichnet ist, dass** es automatische Mittel (35) zum Schieben der Manövrierstange (14) des hülsenartigen Kopplungselements (13) der Elektrospindel (10) umfasst, wobei die automatischen Schiebermittel (35) sich in den Bewegungsmitteln (39) des Bearbeitungskopfs (40) oder am Portalrahmen (37) befinden.

4. Das Bearbeitungszentrum gemäß Anspruch 3, **dadurch gekennzeichnet, dass** die Bewegungsmittel (39) Mittel zur Translation auf zwei Achsen (Y, Z) und Mittel zur Rotation für die Winkelpositionierung des Bearbeitungskopfs (40) mit Bezug auf einen zu bearbeitenden Balken umfassen.

5. Das Bearbeitungszentrum gemäß Anspruch 4, **dadurch gekennzeichnet, dass** erste Mittel zur Translation mit Bezug auf eine zweite Achse (Y) in einem Schieber (42) bestehen, während zweite Mittel zur Translation mit Bezug auf eine dritte Achse (Z) in einem Arm (43) bestehen, welcher sich hauptsächlich in eine Richtung parallel zur Achse (Z) erstreckt und von dem Schieber (42) mit Mitteln zu seiner Translation in eine Richtung parallel zur Achse (Z) getragen ist, wobei der Arm (43) im Wesentlichen röhrenförmig ist und den Bearbeitungskopf (40) an seinem unteren Ende trägt.

6. Das Bearbeitungszentrum gemäß einem oder mehreren der Ansprüche 3 bis 5, **dadurch gekennzeichnet, dass** der Bearbeitungskopf (40) einen C-förmigen Träger (44) umfasst, welcher an einem ersten Ende (46) desselben drehbar, über ein erstes Rotationsgelenk (47), mit dem röhrenförmigen Arm (43) gekoppelt ist, zum Zwecke einer Drehung um die Achse (Z); wobei die Elektrospindel (10) wiederum drehbar mit dem zweiten, gegenüberliegenden Ende (48) des C-förmigen Trägers (44) gekoppelt ist, welches drehgelenkig mit einem zweiten Rotationsgelenk (49) verbunden ist, um sich um eine Achse zu drehen, die senkrecht zu der Achse (Z) ist.

7. Das Bearbeitungszentrum gemäß Anspruch 5 oder 6, **dadurch gekennzeichnet, dass** die automatischen Schiebermittel (35) an dem röhrenförmigen Arm (43) angeordnet und ausgebildet sind, um entlang der dritten Achse (Z) zu arbeiten.

8. Das Bearbeitungszentrum gemäß Anspruch 7, **dadurch gekennzeichnet, dass** die automatischen Schiebermittel (35) eine Schubstange (50) umfassen, die von einem in einem Antriebszylinder (52) angeordneten Kolben (51) getragen ist, wobei der Antriebszylinder (52) in den röhrenförmigen Arm (43) integriert ist.

9. Das Bearbeitungszentrum gemäß einem oder mehreren der Ansprüche 5 bis 8, **dadurch gekennzeichnet, dass** der Werkzeughalter (41) im unteren Teil des Portalrahmens (37), unterhalb des röhrenförmigen Arms (43), angeordnet ist.

## Revendications

1. Electrobroche pour changement automatique d'outil, comprenant :
- un moteur électrique (11), dont l'arbre de rotation (12) supporte au moins une extrémité d'un couplage en forme de collet (13) pour des outils de fraisage interchangeables et autres, et, à une extrémité opposée, un outil à lame (16),
- une tige de manœuvre axiale (14), qui est coaxiale et passe à travers l'arbre de rotation (12), pour ouvrir et fermer le couplage en forme de collet (13),
ladite électrobroche étant **caractérisée en ce qu'**elle est configurée de manière à avoir un accès direct depuis l'extérieur à ladite tige de manœuvre (14) afin de la déplacer, dans laquelle ledit outil à lame (16) comprend un corps annulaire de support de lame (18) et une lame circulaire (19), ledit corps de support de lame (18) étant coaxial et concentrique par rapport à l'arbre de rotation (12), dans lequel une ouverture externe (15) pour un accès direct à la tige de manœuvre (14) est définie sur le corps annulaire de support de lame (18).

2. Electrobroche selon la revendication précédente, **caractérisée en ce que** ladite ouverture externe pour un accès direct (15) est constituée d'un trou traversant, ladite tige de manœuvre (14) faisant saillie depuis ledit trou traversant avec une queue de celle-ci (20).

3. Centre d'usinage (36), comprenant :
- un portique (37) comportant une ouverture (38a) pour le passage d'une poutre à usiner,
- des moyens d'avancement (38) pour une poutre à usiner, définissant un axe (X) d'insertion de la poutre à travers ladite ouverture de passage (38a),
- une tête d'usinage (40), comprenant une électrobroche (10) selon les revendications 1 et 2,
- des moyens de déplacement (39) pour la tête d'usinage (40),
- un porte-outil (41) apte à supporter des outils de remplacement pour ladite tête d'usinage (40),
ledit centre d'usinage (36) étant **caractérisé en ce qu'**il comprend des moyens automatiques (35) de poussée de la tige de manœuvre (14) du couplage en forme de collet (13) de l'électrobroche (10), lesdits moyens automatiques de poussée (35) étant agencés à bord des moyens de déplacement (39) de ladite tête d'usinage (40) ou sur le portique (37) .

4. Centre d'usinage selon la revendication 3, **caractérisé en ce que** lesdits moyens de déplacement (39) comprennent des moyens de translation sur deux axes (Y, Z) et des moyens de rotation pour le positionnement angulaire de la tête d'usinage (40) par rapport à une poutre à usiner.

5. Centre d'usinage selon la revendication 4, **caractérisé en ce qu'**un premier moyen de translation par rapport à un deuxième axe (Y) est constitué d'un coulisseau (42) et un second moyen de translation par rapport à un troisième axe (Z) est constitué d'un bras (43) qui s'étend principalement dans une direction parallèle à l'axe (Z) et est supporté par le coulisseau (42) avec un moyen pour sa translation dans une direction parallèle à l'axe (Z), ledit bras (43) étant sensiblement tubulaire et supportant la tête d'usinage (40) à l'extrémité inférieure de celui-ci.

6. Centre d'usinage selon une ou plusieurs des revendications 3 à 5, **caractérisé en ce que** ladite tête d'usinage (40) comprend un support en forme de C (44) qui est couplé en rotation par une première extrémité (46) de celui-ci, avec une première articulation rotative (47), au bras tubulaire (43) pour une rotation autour de l'axe (Z), ladite électrobroche (10) étant à son tour couplée en rotation à la seconde extrémité opposée (48) dudit support en forme de C (44), qui est pivotée avec une seconde articulation rotative (49), de manière à tourner autour d'un axe perpendiculaire audit axe (Z).

7. Centre d'usinage selon la revendication 5 ou 6, **caractérisé en ce que** lesdits moyens automatiques de poussée (35) sont agencés sur ledit bras tubulaire (43) et sont aptes à fonctionner le long dudit troisième axe (Z) .

8. Centre d'usinage selon la revendication 7, **caractérisé en ce que** lesdits moyens automatiques de poussée (35) comprennent une tige de poussée (50) supportée par un piston (51) agencé dans un cylindre d'actionnement (52), ledit cylindre d'actionnement (52) étant intégré à l'intérieur du bras tubulaire (43).

9. Centre d'usinage selon une ou plusieurs des revendications 5 à 8, **caractérisé en ce que** le porte-outil (41) est agencé dans la partie inférieure du portique (37), au-dessous du bras tubulaire (43).
